# EUROPÄISCHE PATENTSCHRIFT

(11) **EP 0 791 389 B1**
(45) Veröffentlichungstag und Bekanntmachung des Hinweises auf die Patenterteilung: **15.05.2002**
(21) Anmeldenummer: 97102465.8
(22) Anmeldetag: 15.02.1997
(51) Int. Cl.: B01D 53/86, B01D 53/88

(54) **Katalysatoranordnung, insbesondere für einen Dreizugkessel**
Catalyst assembly, in particular for a three-pass boiler
Dispositif catalyseur, notamment pour une chaudière à trois passages

(30) Priorität: 20.02.1996 DE 19606135
(43) Veröffentlichungstag der Anmeldung: 27.08.1997
(73) Patentinhaber: ERC Emissions-Reduzierungs-Concepte GmbH, D-22844 Norderstedt (DE)
(72) Erfinder: Pachaly, Reinhard, Dipl.-Ing., 50171 Kerpen (DE); Reynolds, Thomas, Dr.-Ing., 21256 Handeloh (DE); Meurer, Jan-Dirk, 21224 Rosengarten (DE)
(74) Vertreter: Jaeschke, Rainer, Dipl.-Ing.

(56) Entgegenhaltungen:
- EP-A- 0 588 079
- WO-A-93/22047

## Beschreibung

Die Erfindung betrifft eine Katalysatoranordnung für die Schadstoffreduzierung von Rauchgasen eines Rauchrohrkessels, bei dem das Rauchgas durch Wärmeaustauscherrohre geführt wird, insbesondere für die selektive katalytische Reduktion zur Rauchgasentstickung eines Dreizugkessels.

Im Zuge der immer stärker werdenden Belastung der Umwelt durch Rauchgase von insbesondere mit Schweröl befeuerten Kesselanlagen ist es erforderlich, durch entsprechende Maßnahmen das Rauchgas weitgehend von Schadstoffen zu befreien. Neben Ruß und anderen Schadstoffen treten im Rauchgas insbesondere Stickoxide auf, die als Verursacher von Umweltschäden bekannt sind.

Zur Reduzierung von Stickoxiden, der sogenannten Entstickung, sind vor allem zwei Verfahren bekannt, nämlich zum einen die selektive nichtkatalytische Reduktion, das SNCR-Verfahren, und zum anderen die selektive katalytische Reduktion, das SCR-Verfahren. Bei dem SNCR-Verfahren wird Ammoniak oder ein Ammoniak freisetzendes Reduktionsmittel unmittelbar in die Flamme der Kesselanlage eingegeben, um die Stickoxide zu reduzieren. Bei dem SCR-Verfahren wird das Rauchgas mit zuzugebenden Ammoniak über einen Katalysator, meist Vanadiumoxid oder Wolframoxid, geführt, um die Stickoxide zu reduzieren.

Die beiden Verfahren arbeiten jeweils bei unterschiedlichen Temperaturen. Während das SNCR-Verfahren bei höheren Temperaturen, beispielsweise zwischen 850° und 1100°C, durchgeführt wird, erfolgt die selektive katalytische Reduktion bei einer Temperatur des Rauchgases von etwa 180° bis 450°C. Die Temperatur, bis zu welcher das SCR eingesetzt werden kann, hängt insbesondere vom Schwefelgehalt des verwendeten Brennstoffes ab, da mit höherem Schwefelgehalt und mit geringerer Temperatur die Bildung von Ammoniumsulfat aus SO₃ und NH₃ begünstigt wird. Das Ammoniumsulfat lagert sich auf dem Katalysator ab, so daß der Wirkungsgrad sinkt. Die kritische Temperatur, bei der die Bildung von Ammoniumsulfat auftritt, liegt etwa bei 270°C.

Weiterhin ist es beispielsweise aus den Druckschriften WO 91/04224, *US-PS* 5,139,754, US-PS 5,286,467 und WO 93/22047 bekannt, beide Verfahren in Kombination hintereinander anzuwenden. Hier wird so vorgegangen, daß durch das in die Flamme eingeführte Reduktionsmittel ein Überschuß an Ammoniak erzeugt wird, das anschließend im weiteren Kesselzugverlauf in Anwesenheit des Katalysators das Rauchgas weiter entstickt. Hierdurch können hohe Entstickungsgrade erreicht werden.

Grundsätzlich besteht jedoch bei dem SCR-Verfahren ein Problem in der Anordnung des Katalysators. Im allgemeinen wird das Rauchgas durch separate Katalysatorkammern geführt. Hier besteht ein Nachteil darin, daß in diesen Kammern häufig große Druckverluste aufgrund der erforderlichen Umlenkungen auftreten.

Für kleinere Kesselanlagen werden häufig ölbefeuerte oder schwerölbefeuerte Dreizugkessel eingesetzt. Auch bei diesen Kesselanlagen ist es erforderlich, die Stickoxide zu reduzieren. Hier besteht bei der Anordnung des Katalysators das Problem darin, daß häufig nicht genügend Raum zur Verfügung steht, um den Katalysator unterzubringen. Es ist bekannt, den Katalysator zwischen dem zweiten und dem dritten Zug anzuordnen. Hier besteht ein Nachteil darin, daß dort häufig nicht die optimalen Temperaturen vorherrschen, die für die Durchführung des SCR-Verfahrens erforderlich wären.

Insbesondere bei Kesseln neuerer Bauart, die eine geringe Flammrohrbelastung aufweisen, sind der SCR-Technik Grenzen gesetzt, da bei diesen Kesseln hinter dem zweiten Kesselzug Temperaturen auftreten, die je nach Kessellast im Bereich von ca. 200°C liegen, so daß hier die kritische Temperatur bezüglich der Ammoniumsulfatblidung bereits unterschritten ist. Ein wirkungsvoller Einsatz der SCR-Technik ist hier nicht oder nur mit großem Aufwand möglich, beispielsweise durch einen sogenannten heißen Bypass, durch den von dem Flammrohr unmittelbar Verbrennungsgase hinter den zweiten Kesselzug geleitet werden.

Ein weiteres Problem besteht insbesondere bei bestehenden Kesselanlagen darin, daß auch diese stets den jeweils geltenden Vorschriften für die Grenzen der zulässigen Schadstoffemissionen entsprechen müssen. Es ist daher häufig erforderlich, ältere Kesselanlage für die Anwendung des SNCR-Verfahrens und/oder des SCR-Verfahrens nachzurüsten. Es ist offensichtlich, daß hier die Anordnung von Katalysatoren, die für eine optimale Entstickung erforderlich sind, häufig nur mit großem Aufwand oder überhaupt nicht möglich ist.

Der Erfindung liegt die Aufgabe zugrunde, eine Katalysatoranordnung derart auszubilden, daß zum einen ein platzsparender Einbau möglich ist. Ferner soll durch die Anordnung ermöglicht werden, daß das SCR-Verfahren bei einer dafür optimalen Temperatur durchgeführt werden kann.

Die Aufgabe wird gemäß der Erfindung dadurch gelöst, daß der Katalysator auf wenigstens einem Trägerelement angeordnet ist, das zumindest teilweise in wenigstens ein Wärmeaustauscherrohr einführbar ist. Dies hat den Vorteil, daß der Katalysator ohne weiters in der Rauchgasströmung angeordnet werden kann. Insbesondere ist es nicht erforderlich, separate Katalysatorkammern oder dergleichen vorzusehen. Weiterhin besteht ein Vorteil darin, daß bereits bestehende Kesselanlagen in einfacher Weise nachgerüstet werden können.

In einer zweckmäßigen Ausführungsform ist vorgesehen, daß das Trägerelement als Drahtrohrgeflecht ausgebildet ist. Dies hat den Vorteil, daß der Druckverlust durch das Trägerelement gering gehalten werden kann. Das Drahtrohrgeflecht kann beispielsweise aus Edelstahl bestehen und im wesentlichen hohlzylindrisch ausgebildet sein. Hierdurch kann ferner eine gute Umspülung des Katalysators erreicht werden.

In einer anderen Ausführungsform der Erfindung ist vorgesehen, daß das Trägerelement verschiebbar in dem Wärmeaustauscherrohr gehalten wird. Dies hat den Vorteil, daß die Lage des Katalysators in Abhängigkeit von den Betriebsparametern der jeweiligen Kesselanlage verändert werden kann, um den Katalysator in dem für das SCR-Verfahren optimalen Temperaturbereich des Rauchgasstromes anzuordnen.

Im einzelnen kann hierbei vorgesehen werden, daß das Trägerelement über wenigstens zwei radial nach außen weisende Abstandshalter im wesentlichen mittig in dem Wärmeaustauscherrohr gehalten wird. Zweckmäßig kann es hierbei sein, wenn der Durchmesser des Trägerelementes etwa dem 0,5- bis 0,9-fachen, insbesondere dem 0,65- bis 0,80-fachen, des Innendurchmessers eines Wärmeaustauscherrohres entspricht. Durch diese Maßnahmen wird gewährleistet, daß der Wärmeaustausch an den Rohrwandungen nicht durch das Trägerelement und den Katalysator behindert wird. Ferner wird erreicht, daß der Rauchgasstrom etwa zu gleichen Teilen sowohl innerhalb als auch außerhalb des Drahtrohrgeflechts strömt. Die exakte Aufteilung des Rohrquerschnittes in zwei gleich große Teile läge bei einem Durchmesser, der dem (0,5)^{1/2}-fachen des Rohrinnendurchmessers entspricht.

Gemäß einer vorteilhaften Ausführungsform der Erfindung ist vorgesehen, daß die Abstandshalter elastisch ausgebildet sind, um das Trägerelement unter Vorspannung reibschlüssig in dem Wärmeaustauscherrohr zu halten. Dadurch kann erreicht werden, daß sich das Trägerelement während des Betriebes nicht verschiebt. Die Vorspannung kann hierbei so gewählt sein, daß ein Verschieben von Hand oder mit einer entsprechenden Vorrichtung möglich ist, um den Einbau oder den Austausch zu vereinfachen.

Es kann zweckmäßig sein, wenn die Trägerelemente mit dem Katalysator für verschiedene Wärmeaustauscherrohre des Kessels unterschiedliche Längen aufweisen, um den Druckverlust auszugleichen. Ferner kann auch vorgesehen werden, daß die Trägerelemente für verschiedene Wärmeaustauscherrohre unterschiedlich weit in die Wärmeaustauscherrohre eingeführt sind. Selbstverständlich ist es auch möglich, daß die Trägerelemente mit dem Katalysator teilweise aus den Wärmeaustauscherrohren herausragen. Durch diese Ausgestaltungen ist es möglich, die Anordnung des Katalysators weiter an die Betriebsparameter der Kesselanlage anzupassen.

In einer besonders vorteilhaften Ausführungsform der Erfindung ist vorgesehen, daß der Katalysator Zeolithkristallen, insbesondere metallausgetauschte Zeolithkristalle, aufweist. Diese Zeolithkristalle können die katalytische Reduktion auch bei wesentlich höheren Raumgeschwindigkeiten des Rauchgases und bei kürzeren Verweilzeiten bewirken. Dies ist insbesondere aufgrund der erhöhten Strömungsgeschwindigkeit des Rauchgases innerhalb der Wärmeaustauscherrohre vorteilhaft.

Die Erfindung betrifft weiterhin die Verwendung einer Katalysatoranordnung gemäß der oben erläuterten Art in einem Dreizugkessel. Gemäß der Erfindung ist vorgesehen, daß die Katalysatoranordnung in Strömungsrichtung des Rauchgases zumindest im hinteren Drittel des zweiten Kesselzuges angeordnet ist. In diesem Bereich des Kessels herrschen im allgemeinen die Temperaturen, die für das SCR-Verfahren optimal sind. Ferner ist dieser Bereich von außen gut zugänglich, so daß ein nachträglicher Einbau und/oder ein Austausch der Katalysatoren ohne weiteres möglich ist.

Es kann auch vorgesehen werden, daß die Katalysatoranordnung zumindest teilweise in die 2. Wendekammer hinter dem 2. Kesselzug hineinragt. Ferner kann es zweckmäßig sein, wenn die Katalysatoranordnung in Strömungsrichtung des Rauchgases zumindest im vorderen Drittel des 3. Kesselzuges angeordnet ist. Auch hier kann vorgesehen werden, daß die Katalysatoranordnung zumindest teilweise in die 2. Wendekammer vor dem 3. Kesselzug hineinragt. Durch diese Maßnahmen kann zum einen eine große Katalysatoroberfläche in den Rauchgaszug eingebracht werden. Zum anderen kann der Katalysator hinsichtlich seiner Lage in der Rauchgasströmung optimiert werden. Grundsätzlich kann hier natürlich vorgesehen werden, daß die Trägerelemente mit dem Katalysator für verschiedene Wärmeaustauscherrohre unterschiedlich weit in die Rohre und/oder in die Wendekammern hineinragen, um Druckverluste und unterschiedliche Verweilzeiten des Rauchgases an dem Katalysator auszugleichen.

Es kann dabei vorgesehen werden, daß die einzelnen Katalysatorelemente in der gewünschten Postion in den Wärmeaustauscherrohren zusätzlich fixiert werden. Hierdurch kann ein Verschieben der Tragelemente während des Betriebes zuverlässig vermieden werden. In der Regel wird jedoch die Reibkraft zwischen Tragelement bzw. Abstandhalter und Rohrinnenwandung ausreichen, um ein ungewolltes Verschieben zu verhindern.

Weiterhin kann gemäß einer anderen Ausführungsform der Erfindung vorgesehen werden, daß im Flammrohr (1. Kesselzug) eine Vorrichtung zum Einführen eines Reduktionsmittels vorgesehen ist, um den NOₓ-Gehalt nach der selektiven nichtkatalytischen Reduktion abzubauen und um Ammoniak für die durch die Katalysatoranordnung bewirkte selektive katalytische Reduktion freizusetzen. Hierdurch kann in optimaler Weise das SCR-Verfahren mit dem SNCR-Verfahren verknüpft werden, da insbesondere die Katalysatoranordnung entsprechend den oben beschriebenen Maßnahmen an die durch das SNCR-Verfahren erzeugten und veränderten Betriebsbedingungen der Kesselanlage, z.B. hinsichtlich des Temperaturverlaufs des Rauchgases, angepaßt werden kann.

Weiterhin kann es zweckmäßig sein, wenn die Vorrichtung zum Einführen des Reduktionsmittels so ausgebildet ist, daß der Ort der Reduktion nach dem SNCR-Verfahren in Abhängigkeit von der Kessellast einstellbar ist. Hier kann vorgesehen werden, daß die Vorrichtung zum Einführen des Reduktionsmittels eine verschiebbare Lanze der allgemein bekannten Art aufweisen. Auch kann vorgesehen werden, daß eine Zweistoffdüse, wie sie beispielsweise durch die WO 91/17814 bekannt ist, verwendet wird, bei welcher durch entsprechende Auswahl des Druckes und der Menge des Trägermittelstromes entsprechende Tröpfchengrößen erzeugt werden, die an einer vorgebbaren Stelle des Flammrohres zur Reaktion mit den Stickoxiden kommen.

Durch die Verschiebung der Einsprühstelle kann stets der optimale Temperaturbereich für das SNCR-Verfahren auch im Hinblick auf die folgende selektive katalytische Reduktion durch die eingebaute Katalysatoranordnung eingehalten werden. Dieser Temperaturbereich liegt etwa bei 750°C - 950°C, so daß stets ein Ammoniaküberschuß (Ammoniakschlupf) für die SCR-Reaktion erzeugt wird.

Es ist offensichtlich, daß durch die Katalysatoranordnung gemäß der Erfindung der Katalysator bezüglich seiner Position flexibel eingesetzt werden kann. Dies bedeutet, daß auch bei der Verwendung von modernen Dreizugkesseln mit niedriger Flammrohrbelastung und entsprechend niedrigen Temperaturen des Rauchgases hinter dem 2. Kesselzug das SCR-Verfahren wirkungsvoll eingesetzt werden kann. Insbesondere hat sich gezeigt, daß bei einer Kombination des SCNR-Verfahrens mit dem SCR-Verfahren unter Verwendung einer Katalysatoranordnung gemäß der Erfindung sowie durch Zugabe eines Neutralisationsmittels, wie Salze von organischen Säuren mit Magnesium oder Kalzium oder dergleichen, zur Reduzierung des Schwefelgehaltes der Katalysator auch noch bei Temperaturen zwischen 170°C und 340°C wirkungsvoll bleibt.

Die Erfindung betrifft daher ferner ein Verfahren für die Schadstoffreduzierung von Rauchgasen eines Rauchrohrkessels, bei welchem das Rauchgas durch Wärmeaustauscherrohre geführt wird, insbesondere für die Rauchgasentstickung eines Dreizugkessels. Bei dem Verfahren wird in dem Flammrohr (1. Kesselzug) im Temperaturbereich zwischen 750°C und 950°C, insbesondere zwischen 800° und 850°C, ein Reduktionsmittel für die selektive nichtkatalytische Reduktion eingeführt, dessen zugeführte Menge ausreichend ist, um einen Ammoniaküberschuß freizusetzen, wobei das teilentstickte Rauchgas mit dem Ammoniaküberschuß bei einem Temperaturbereich von 170°C und 340°C zur selektiven katalytischen Reduktion über eine Katalysatoranordnung geführt wird, die innerhalb des Kesselgehäuses zumindest innerhalb des durch in Strömungsrichtung hinteren Drittel des 2. Kesselzuges, der 2. Wendekammer und dem vorderen Drittel des 3. Kesselzuges begrenzten Bereichs angeordnet ist. Durch diese Maßnahmen kann in vorteilhafter Weise eine effektive Entstickung der Rauchgase von bis zu 90% erfolgen. Insbesondere muß nicht mehr eine zusätzliche externe Katalysatorkammer vorgesehen werden. Dadurch können die Druckverluste gering gehalten werden.

Grundsätzlich kann durch die Verwendung einer Katalysatoranordnung gemäß der Erfindung die Position des Katalysators frei eingestellt werden. Der Katalysator kann daher in Abhängigkeit von der Kesselkonstruktion und der Flammrohrbelastung optimal an den jeweiligen Kessel angepaßt werden. Es kann beispielsweise vorgesehen werden, daß bei einem Dreizugkessel die selektive katalytische Reduktion in Rauchgasströmungsrichtung zumindest im hinteren Drittel des zweiten Kesselzuges erfolgt. Auch ist es möglich, daß bei einem Dreizugkessel die selektive katalytische Reduktion in Rauchgasströmungsrichtung zumindest im vorderen Drittel des dritten Kesselzuges erfolgt. Selbstverständlich kann auch vorgesehen werden, daß bei einem Dreizugkessel die selektive katalytische Reduktion in Rauchgasströmungsrichtung zumindest in der zweiten Wendekammer hinter dem zweiten Kesselzug erfolgt. Grundsätzlich kann dabei die Katalysatoranordnung gemäß den obigen Ausführungen ausgebildet sein.

Weiterhin kann vorgesehen werden, daß dem Brennstoff und/oder der Verbrennungsluft und/oder dem Reduktionsmittel ein Neutralisationsmittel zugesetzt wird, um den Schwefelgehalt zu reduzieren. Hierdurch kann die Bildung von Ammoniumsulfat verringert werden, so daß auch bei geringeren Temperaturen das SCR-Verfahren wirkungsvoll arbeiten kann, ohne daß die Gefahr besteht, daß der Katalysator durch Ablagerungen inaktiv wird. Als Neutralisationsmittel kann beispielsweise ein öllösliches Salz organischer Säuren mit Magnesium oder Kalzium verwendet werden.

Im einzelnen kann hierbei weiterhin so vorgegangen werden, daß die Katalysatoranordnung als Katalysator Zeolithkristalle, insbesondere metallausgetauschte Zeolithkristalle, aufweist, die auf Trägerelementen angeordnet sind, die zumindest teilweise in wenigstens ein Wärmeaustauscherrohr eingeführt werden. Die Zeolithkristalle bewirken eine Umsetzungsreaktion schon bei kürzeren Verweilzeiten und können somit bei größeren Rauchgasströmungsgeschwindigkeiten eingesetzt werden, wie sie beispielsweise in den Wärmeaustauscherrohren auftreten.

Zweckmäßig ist es, wenn als Reduktionsmittel Harnstoff oder eine harnstoffhaltige wässrige Lösung eingesetzt wird. Harnstoff oder eine Lösung mit Harnstoff ist in vorteilhafter Weise leicht handhabbar, so daß der Einsatz auch für kleinere Kesselanlagen möglich ist.

Weiterhin ist es gemäß einer Ausführungsform der Erfindung vorgesehen, daß die Einführung des Reduktionsmittels bezüglich des Ortes und des Temperaturbereiches und der Menge in Abhängigkeit von der Kessellast erfolgt. Insbesondere kann dadurch auch das Verhältnis von der Entstickung durch das SNCR-Verfahren zu der Entstickung durch das SCR-Verfahren eingestellt werden. Zweckmäßig ist es hierbei, wenn die Entstickung etwa jeweils zur Hälfte durch das SNCR- und das SCR-Verfahren erfolgt.

Die Erfindung wird im folgenden anhand der schematischen Zeichnung näher erläutert. Es zeigen:
- Fig. 1: im Schnitt das Prinzip eines Dreizugkessels,
- Fig. 2: die Einzelheit X in vergrößerter Darstellungsform,
- Fig. 3: die Ansicht Y in Fig. 2 und
- Fig. 4: die Ansicht Y in Fig. 2 gemäß einer anderen Ausführungsform.

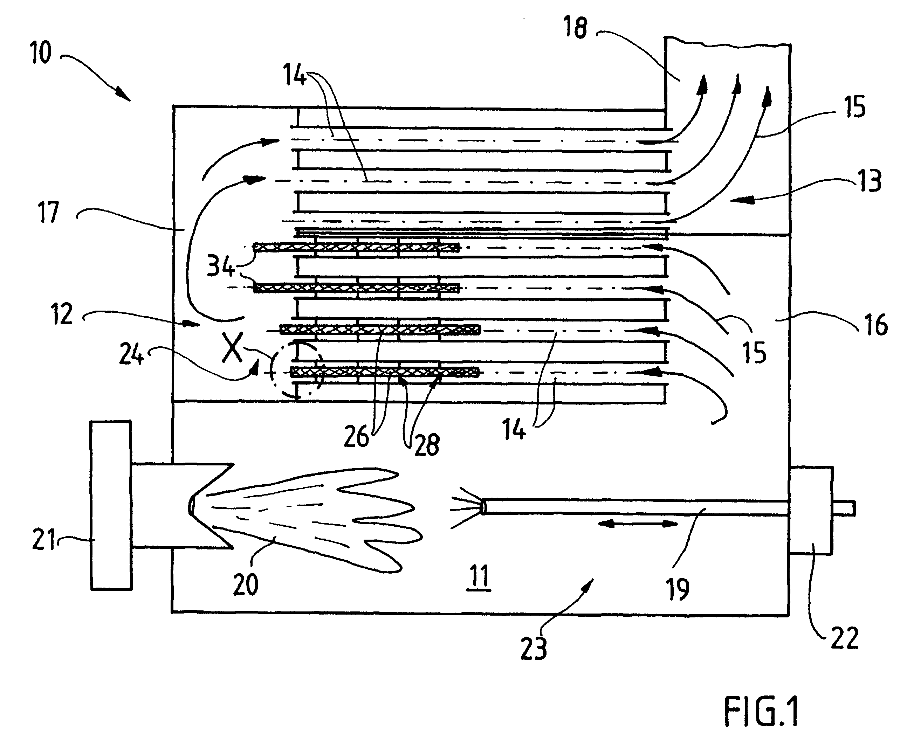

Der in Fig. 1 dargestellte Dreizugkessel 10 weist einen ersten Kesselzug 11, das sogenannte Flammrohr, und einen zweiten Kesselzug 12 sowie einen dritten Kesselzug 13 auf. Bei dem in der Zeichnung dargestellten Prinzip eines Dreizugkessels sind die einzelnen Züge 11, 12, 13 übereinander angeordnet. Häufig weisen die einzelnen Züge aber auch eine andere geometrische Anordnung zueinander auf.

Im zweiten und dritten Kesselzug 12, 13 sind jeweils Wärmeaustauscherrohre 14 vorgesehen, durch die das Rauchgas 15 unter Abgabe von Wärme strömt. Die abgegebene Wärme dient in der Regel zur Dampferzeugung oder zur Erhitzung von Wasser.

Der erste Kesselzug 11 ist über die erste Wendekammer 16 mit dem zweiten Kesselzug 12 verbunden, während der zweite Kesselzug 12 über die zweite Wendekammer 17 mit dem dritten Kesselzug in Verbindung steht. Der dritte Kesselzug 13 endet im Kamin 18, durch den die Rauchgase in die Atmosphäre gelangen.

Für eine Reduzierung der Schadstoffe im Rauchgas, insbesondere zur Entstickung derselben, ist im Flammrohr 11 eine Vorrichtung 23 zum Einführen eines Reduktionsmittels für die selektive nichtkatalytische Reduktion der Rauchgase 15 vorgesehen. Im einzelnen ist die Anordnung so getroffen, daß die Vorrichtung 23 eine Lanze 19 aufweist, die im Flammrohr 11 hin- und herbewegbar ist und durch die das Reduktionsmittel, beispielsweise Harnstoff in wässriger Lösung, unmittelbar in die Flamme 20 des Brenners 21 entgegen die Rauchgasströmung gesprüht werden kann. Das Reduktionsmittel kann dabei durch eine entsprechende Kühleinrichtung der Lanze oder durch entsprechende vorherige Kühlung, die in der Zeichnung nicht näher dargestellt ist, gekühlt werden. Die Lanze 19 ist an dem dem Brenner 21 gegenüberliegenden Ende des Flammrohres 11 verschiebbar gelagert und kann durch einen Stellmotor 22 verfahren werden, der in Abhängigkeit von der Kessellast gesteuert wird, um ein Einsprühen des Reduktionsmittels in dem gewünschten Temperaturbereich, beispielsweise zwischen 800° und 850°C, des Flammrohres 11 zu ermöglichen.

Zur weiteren Reduzierung der Schadstoffe kann vorgesehen werden, daß dem Reduktionsmittel oder dem Brennstoff ein Neutralisationsmittel zur Neutralisation des Schwefeltrioxids zugesetzt wird. Diese Maßnahme ist in der Zeichnung der Übersichtlichkeit halber nicht dargestellt.

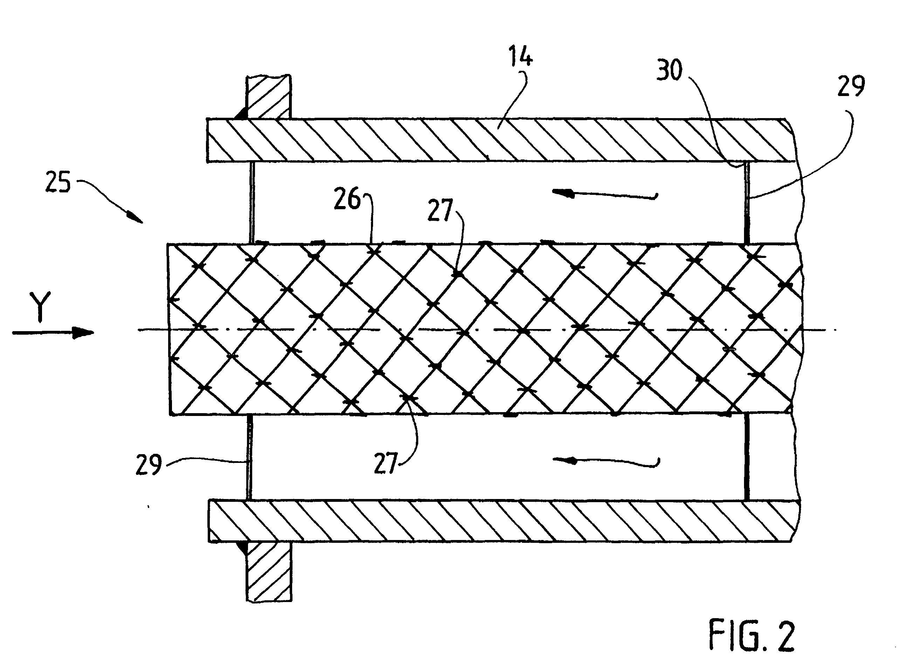

Im zweiten Kesselzug 12 ist eine Katalysatoranordnung 24 vorgesehen, um eine weitere Reduzierung des Stickoxidgehaltes nach dem SCR-Verfahren zu ermöglichen. Die Katalysatoranordnung 24 besteht aus mehreren Katalysatorelementen 25, die jeweils in den einzelnen Wärmeaustauscherrohren 14 angeordnet sind. Wie insbesondere aus den Fig. 2 bis 4 ersichtlich, weist ein Katalysatorelement 25 ein als Drahtrohrgeflecht ausgebildetes Trägerelement 26 auf, auf dem eine Vielzahl von Katalysatorpartikeln 27 angeordnet sind.

Die Drahtrohre 26 weisen hier etwa den halben Innendurchmesser des Wärmeaustauscherrohres 14 auf. Die Katalysatorpartikel 27 können zum Beispiel Zeolithkristalle, insbesondere metallausgetauschte Zeolithkristalle wie des Typs Cu-ZSM5, sein. Bei der Verwendung von Zeolith auf einem Drahtrohrgeflechtes hat sich gezeigt, daß eine Menge von etwa 3,5 bis 30 Gew.-% je nach Aufgabenstellung ausreichend ist. Das Drahtrohr kann eine Länge von beispielsweise 400 - 600 mm haben und aus einem Edelstahlgeflecht bestehen, das eine Drahtdicke von 25 - 35 µm und eine Maschenweite von etwa 25 - 35 µm aufweist.

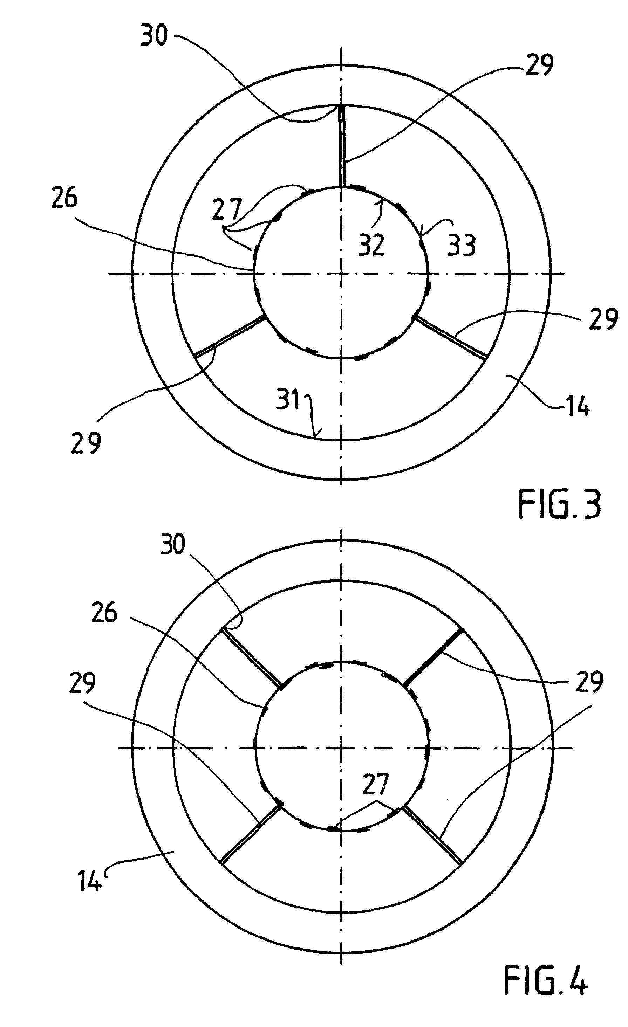

Das Trägerelement 26 weist mehrere, im axialen Abstand zueinander angeordnete Sätze 28 von Abstandshaltern 29 auf, um das rohrförmige Drahtrohrgeflecht in etwa mittig in einem Wärmeaustauscherrohr 14 zu halten. Ein Satz 28 von Abstandshaltern weist je nach Ausführungsform drei (Fig. 3) oder vier (Fig. 4) Abstandshalter 29 auf, die radial nach außen weisen und mit ihren freien Enden 30 an der Innenwandung 31 des Wärmeaustauscherrohres 14 anliegen.

Die Abstandshalter 29 können dabei elastisch ausgebildet und so bemessen sein, daß im Zusammenwirken mit dem im allgemeinen elastischen Drahtrohrgeflecht das Trägerelement 26 unter Vorspannung reibschlüssig im Wärmeaustauscherrohr gehalten wird. Zum einen können dadurch die Trägerelemente 26 und somit die wirksamen Katalysatoren in Rauchgasströmungsrichtung verschoben werden. Zum anderen wird ein fester Halt des Trägerelementes 26 in dem Wärmeaustauscherrohr 14 gewährleistet.

Die Anordnung der Trägerelemente 26 im Rauchgasstrom ist durch die Verschiebbarkeit beliebig. Insbesondere kann vorgesehen werden, daß die Trägerelemente 26 jeweils in verschiedenen Wärmeaustauscherrohren 14 unterschiedlich weit eingeschoben werden und/oder unterschiedlich weit in die betreffende Wendekammer hineinragen. So kann vorgesehen werden, daß die in der Zeichnung unteren Trägerelemente 26 des zweiten Kesselzuges 12 weiter in die Rohre eingeführt sind, während die oberen weiter in die Wendekammer 17 hineinragen. Somit läßt sich ein Profil von in der Wendekammer 17 vorhandenen Trägerelemente 26 derart aufbauen, daß der Druckverlust für alle durch die einzelnen Wärmeaustauscherrohre geführte Teilströme des Rauchgases in etwa gleich ist.

Ferner kann vorgesehen werden, daß die unteren Trägerelemente kürzer als die oberen Trägerelemente sind. Damit kann erreicht werden, daß die Teilströme des Rauchgases jeweils über eine gleich große Katalysatoroberfläche hinwegstreichen. Dies wird dadurch erreicht, daß die unteren Teilströme noch teilweise die in die betreffende Wendekammer hineinragenden freien Enden 34 der Trägerelemente 26 umspülen und dort ebenfalls noch eine Redaktion erfolgt. Hiermit kann die insgesamt einzubringende Katalysatormenge optimal angepaßt werden.

Grundsätzlich ist es zweckmäßig, wenn das Trägerelement 26 als Drahtrohrgeflecht ausgebildet ist, auf dem die einzelnen Katalysatorpartikel 27 angeordnet sind. Dadurch kann eine effektive Umspülung der Katalysatoroberfläche mit dem Rauchgas erreicht werden. Es sind natürlich auch andere Trägerelemente möglich, beispielsweise streifenförmige Bänder aus Drahtgeflecht, einfache Stangen, Blechbänder oder Rohre aus Vollmaterial, die jeweils gelocht sein können, und dergleichen. Die ansonsten ebenen Bänder können auch um die Längsachse verdrillt sein. Die Bänder weisen eine Breite von etwa dem 0,95 - 0,98-fachen des Innendurchmessers des Wärmeaustauscherrohres auf. Das Tragelement besteht vorzugsweise aus korrosionsbeständigem Metall, beispielsweise Edelstahl, um den Rauchgastemperaturen standhalten zu können.

Es muß stets darauf geachtet werden, daß zum einen der Druckverlust und eine Verringerung des Strömungsquerschnittes durch den eingebauten Katalysator so gering wie möglich gehalten wird. Zum anderen muß gewährleistet sein, daß die einzelnen Katalysatorpartikel ausreichend in Kontakt mit dem Rauchgas kommen, um die Reduktion zu ermöglichen. Selbstverständlich ist es auch möglich, Katalysatormodule zu verwenden. Diese Module können eine Breite von dem 0,90 bis 0,98-fachen und eine Dicke von dem 0,1 bis 0,2-fachen des Innendurchmessers des Wärmeaustauscherrohres aufweisen.

Die einzelnen Katalysatorelemente 27 können hierbei gleichmäßig auf der Oberfläche des Trägerelementes 26 verteilt sein. Auch ist es vorteilhaft, die Katalysatorpartikel 27 sowohl auf der Innenseite 32 des als auch auf der Außenseite 33 des Trägerelementes anzuordnen. Grundsätzlich kann aber auch eine ungleichmäßige Verteilung der Katalysatormenge vorgesehen werden, um in Richtung der Rauchgasströmung jeweils die erforderliche Katalysatormenge zur Verfügung zu stellen.

Die Erfindung wird im folgenden anhand eines Auslegungsbeispiels näher erläutert. Eine Schwerölfeuerung eines Flammrohr-/Rauchrohrkessels produziert eine Rauchgasmenge von 12.000 m³ₙ/h mit einem Wassergehalt von 11 Vol.-%. Die O₂-Konzentration im Rauchgas beträgt 3 Vol-%. Das Rauchgas enthält weiterhin 1.600 mg/m³ SO₂ und 50 mg/m³ SO₃. Die Feuerung emittiert außerdem Stickoxide mit einer Konzentration von 750 mg/m³ₙ im Rauchgas. In der SNCR-Vorrichtung werden 20 kg/h eines Reduktionsmittels, das Harnstoff in einer Konzentration von 40% und Magnesium als Neutralisationsmittel in einer Konzentration vom 0,8 % enthält mit 100 kg/h Wasser vermischt und mittels einer Zweistoffdüse, die mit 10 kg/h Luft und einem Druck von 3,2 bar betrieben wird, in das Flammrohr eingesprüht. Die Temperatur beträgt im Bereich der Einführstelle etwa 850°C.

Am Eintritt des Rauchgases in den zweiten Zug hinter der SNCR-Stufe beträgt die NOₓ-Konzentration 450 mg/m³ und die NH₃-Konzentration 115 mg/m³ₙ. Die SO₃-Konzentration beträgt 20 mg/m³. Der zweite Kesselzug besteht aus 300 Rohren mit einem Innendurchmesser von 57 mm, durch die das Rauchgas geführt wird und sich von 800°C auf 350°C abkühlt. Die einzelnen Katalysatorelemente der Katalysatoranordnung bestehen aus einem Drahtrohrgeflecht mit einem Durchmesser von 40 mm und einer Länge von 600 mm. Die Katalysatorelemente sind so in die Wärmeaustauscherrohre eingeschoben, daß sie etwa 200 mm aus dem Wärmeaustauscherrohr in die zweite Wendekammer hineinragen. Am Eintritt des Rauchgases in den dritten Kesselzug beträgt die NOₓ-Konzentration 150 mg/m³ und die NH₃-Konzentration 5 mg/m³ₙ.

Es ist offensichtlich, daß mit einer derartigen Katalysatoranordnung ein einfacher Einbau einer SCR-Stufe in einer Kesselanlage möglich ist. Insbesondere ist es aber ohne weiteres möglich, bereits bestehende Kesselanlagen, beispielsweise Dreizugkessel, mit einer SCR-Stufe nachzurüsten, ohne daß ein aufwendiger Umbau des Kesselgehäuses oder der Rauchgasführung erforderlich wird.

### Bezugszeichenliste

- 10: Dreizugkessel
- 11: 1. Kesselzug (Flammrohr)
- 12: 2. Kesselzug
- 13: 3. Kesselzug
- 14: Wärmeaustauscherrohr
- 15: Rauchgas
- 16: erste Wendekammer
- 17: zweite Wendekammer
- 18: Kamin
- 19: Lanze
- 20: Flamme
- 21: Brenner
- 22: Stellmotor
- 23: SNCR-Vorrichtung
- 24: Katalysatoranordnung
- 25: Katalysatorelement
- 26: Trägerelement
- 27: Katalysatorpartikel
- 28: Satz von Abstandshaltern
- 29: Abstandshalter
- 30: freies Ende
- 31: innere Oberfläche
- 32: Innenseite
- 33: Außenseite
- 34: freies Ende

## Patentansprüche

1. Katalysatoranordnung (24) für die Schadstoffreduzierung von Rauchgasen eines Rauchrohrkessels (10), bei dem das Rauchgas durch Wärmeaustauscherrohre (14) geführt wird, insbesondere für die Rauchgasentstickung eines Dreizugkessels, in dem der Katalysator (27) auf wenigstens einem Trägerelement (26) angeordnet ist **dadurch gekennzeichnet, daß**, das Trägerelement zumindest teilweise in wenigstens ein Wärmeaustauscherrohr (14) einführbar ist.

2. Katalysatoranordnung nach Anspruch 1, **dadurch gekennzeichnet, daß** das Trägerelement (26) als Drahtrohrgeflecht, Vollrohr oder gelochtes Rohr ausgebildet ist.

3. Katalysatoranordnung nach Anspruch 2, **dadurch gekennzeichnet, daß** der Durchmesser des Trägerelementes (26) dem 0,50- bis 0,90-fachen, insbesondere dem 0,65- bis 0,80-fachen, des Innendurchmessers des Wärmeaustauscherrohres (14) entspricht.

4. Katalysatoranordnung nach Anspruch 1, **dadurch gekennzeichnet, daß** das Tragelement als streifenförmiges Band aus Vollmaterial, aus gelochtem Material oder aus Drahtgeflecht besteht, dessen Breite dem 0,95 bis 0,98-fachen des Innendurchmessers des Wärmeaustauscherrohres (14) entspricht.

5. Katalysatoranordnung nach einem der Ansprüche 1 bis 4, **dadurch gekennzeichnet, daß** das Trägerelement (26) verschiebbar in dem Wärmeaustauscherrohr (14) gehalten wird.

6. Katalysatoranordnung nach einem der Ansprüche 1 bis 5, **dadurch gekennzeichnet, daß** das Trägerelement (26) über wenigstens zwei radial nach außen weisende Abstandshalter (29) im wesentlichen mittig in dem Wärmeaustauscherrohr (14) gehalten wird.

7. Katalysatoranordnung nach Anspruch 6, **dadurch gekennzeichnet, daß** die Abstandshalter (29) elastisch ausgebildet sind, um das Trägerelement (26) unter Vorspannung reibschlüssig in dem Wärmeaustauscherrohr (29) zu halten.

8. Katalysatoranordnung nach einem der Ansprüche 1 bis 7, **dadurch gekennzeichnet, daß** die Trägerelemente (26) für verschiedene Wärmeaustauscherrohre (14) des Kessels unterschiedliche Längen aufweisen, um den Druckverlust auszugleichen.

9. Katalysatoranordnung nach einem der Ansprüche 1 bis 8, **dadurch gekennzeichnet, daß** die Trägerelemente (26) für verschiedene Wärmeaustauscherrohre (14) unterschiedlich weit in die Wärmeaustauscherrohre (14) eingeführt sind.

10. Katalysatoranordnung nach einem der Ansprüche 1 bis 9, **dadurch gekennzeichnet, daß** der Katalysator (27) Zeolithkristalle, insbesondere metallausgetauschte Zeolithkristalle wie des Typs Cu-ZSM5, aufweist.

11. Katalysatoranordnung nach einem der Ansprüche 1 bis 10, **dadurch gekennzeichnet, daß** bei einem Dreizugkessel die Katalysatoranordnung in Strömungsrichtung des Rauchgases zumindest im hinteren Drittel des zweiten Kesselzuges (12) angeordnet ist.

12. Katalysatoranordnung nach Anspruch 11, **dadurch gekennzeichnet, daß** die Trägerelemente mit dem Katalysator zumindest teilweise in die 2. Wendekammer (17) hinter dem 2. Kesselzug (12) hineinragen.

13. Katalysatoranordnung nach Anspruch 11 oder 12, **dadurch gekennzeichnet, daß** die Trägerelemente mit dem Katalysator in Strömungsrichtung des Rauchgases zumindest im vorderen Drittel des 3. Kesselzuges (13) angeordnet sind.

14. Katalysatoranordnung nach einem der Ansprüche 11 bis 13, **dadurch gekennzeichnet, daß** die Trägerelemente mit dem Katalysator zumindest teilweise in die 2. Wendekammer (17) vor dem 3. Kesselzug (13) hineinragen.

15. Verfahren für die Schadstoffreduzierung von Rauchgasen eines Rauchrohrkessels (10), bei welchem das Rauchgas durch Wärmeaustauscherrohre (14) geführt wird, insbesondere für die Rauchgasentstickung eines Dreizugkessels, bei welchem Verfahren im Flammrohr (11) im Temperaturbereich zwischen 750° und 950°C, insbesondere zwischen 800°C und 850°C, ein Reduktionsmittel für die selektive nichtkatalytische Reduktion eingeführt wird, dessen zugeführte Menge ausreichend ist, um einen Ammoniaküberschuß freizusetzen, wobei das teilentstickte Rauchgas mit dem Ammoniaküberschuß in einem Temperaturbereich von 170°C und 340°C zur selektiven katalytischen Reduktion über eine Katalysatoranordnung (24) mit einem Katalysator geführt wird, der auf Trägerelementen (26) zumindest teilweise innerhalb wenigstens eines Wärmeaustauscherrohres (14) angeordnet ist.

16. Verfahren nach Anspruch 15, **dadurch gekennzeichnet, daß** bei einem Dreizugkessel die selektive katalytische Reduktion in Rauchgasströmungsrichtung zumindest im hinteren Drittel des zweiten Kesselzuges (12) erfolgt.

17. Verfahren nach Anspruch 15 oder 16, **dadurch gekennzeichnet, daß** bei einem Dreizugkessel die selektive katalytische Reduktion in Rauchgasströmungsrichtung zumindest im vorderen Drittel des dritten Kesselzuges (13) erfolgt.

18. Verfahren nach einem der Ansprüche 15 bis 17, **dadurch gekennzeichnet, daß** bei einem Dreizugkessel die selektive katalytische Reduktion in Rauchgasströmungsrichtung zumindest in der zweiten Wendekammer (17) hinter dem zweiten Kesselzug (12) erfolgt.

19. Verfahren nach einem der Ansprüche 15 bis 19, **dadurch gekennzeichnet, daß** die Katalysatoranordnung (24) als Katalysator (27) Zeolithkristalle, insbesondere metallausgetauschte Zeolithkristalle wie des Typ Cu-ZSM5, aufweist.

20. Verfahren nach einem der Ansprüche 15 bis 19, **dadurch gekennzeichnet, daß** dem Brennstoff und/oder der Verbrennungsluft und/oder dem Reduktionsmittel ein Neutralisationsmittel zugesetzt wird, um den Schwefelgehalt zu reduzieren.

21. Verfahren nach Anspruch 20, **dadurch gekennzeichnet, daß** das Neutralisationsmittel ein öllösliches oder wasserlösliches Salz organischer Säuren mit Magnesium oder Kalzium ist.

## Claims

1. A catalyst assembly (24) for the reduction of harmful substances in flue gases of a fire tube boiler (10), in which the flue gas is conveyed through heat exchanger tubes (14), in particular for the flue gas denitrification of a three-pass boiler, in which the catalyst (27) is disposed on at least one support element (26),
**characterised in that** the support element can be introduced at least partially into one heat exchanger tube (14).

2. A catalyst assembly according to Claim 1,
**characterised in that** the support element (26) is constructed as wire tube mesh, solid tube or perforated tube.

3. A catalyst assembly according to Claim 2,
**characterised in that** the diameter of the support element (26) corresponds to 0.50 to 0.90 times, in particular 0.65 to 0.80 times, the internal diameter of the heat exchanger tube (14).

4. A catalyst assembly according to Claim 1,
**characterised in that** the support element is made as a strip-shaped band from solid material, from perforated material, or from wire mesh, the width of which corresponds to 0.95 to 0.98 times the internal diameter of the heat exchanger tube (14).

5. A catalyst assembly according to one of Claims 1 to 4,
**characterised in that** the support element (26) is displaceably held in the heat exchanger tube (14).

6. A catalyst assembly according to one of Claims 1 to 5,
**characterised in that** the support element (26) is held substantially centrally in the heat exchanger tube (14) via at least two radially outwardly pointing spacers (29).

7. A catalyst assembly according to Claim 6,
**characterised in that** the spacers (29) have an elastic construction in order to hold the support element (26) by frictional engagement accompanied by prestressing in the heat exchanger tube (29).

8. A catalyst assembly according to one of Claims 1 to 7,
**characterised in that** the support elements (26) for various heat exchanger tubes (14) of the boiler have different lengths in order to equalise the pressure loss.

9. A catalyst assembly according to one of Claims 1 to 8,
**characterised in that** the support elements (26) for various heat exchanger tubes (14) are inserted to different depths into the heat exchanger tubes (14).

10. A catalyst assembly according to one of Claims 1 to 9,
**characterised in that** the catalyst (27) comprises zeolite crystals, in particular metal-exchanged zeolite crystals such as of the type Cu-ZSM5.

11. A catalyst assembly according to one of Claims 1 to 10,
**characterised in that** in a three-pass boiler the catalyst assembly is disposed in the direction of flow of the flue gas at least in the rear third of the second boiler flue pass (12).

12. A catalyst assembly according to Claim 11,
**characterised in that** the support elements with the catalyst extend at least partially into the second turning chamber (17) behind the second boiler flue pass (12).

13. A catalyst assembly according to Claim 11 or 12,
**characterised in that** the support elements with the catalyst are disposed in the direction of flow of the flue gas at least in the front third of the third boiler flue pass (13).

14. A catalyst assembly according to one of Claims 11 to 13,
**characterised in that** the support elements with the catalyst extend at least partially into the second turning chamber (17) in front of the third boiler flue pass (13).

15. A process for the reduction of harmful substances in flue gases of a fire tube boiler (10), in which the flue gas is conveyed through heat exchanger tubes (14), in particular for the flue gas denitrification of a three-pass boiler, during which process in the heating tube (11) in the temperature range between 750° and 950°C, in particular between 800°C and 850°C, a reducing agent for the selective non-catalytic reduction is introduced, the supplied quantity of which is sufficient to set free a surplus of ammonia, whereby the partially denitrified flue gas with the surplus of ammonia in a temperature range of 170°C and 340°C is conveyed for the selective catalytic reduction via a catalyst assembly (24) with a catalyst, which is disposed on support elements (26) at least partially inside at least one heat exchanger tube (14).

16. A process according to Claim 15,
**characterised in that** in a three-pass boiler the selective catalytic reduction takes place in the direction of flow of the flue gas at least in the rear third of the second boiler flue pass (12).

17. A process according to Claim 15 or 16,
**characterised in that** in a three-pass boiler the selective catalytic reduction takes place in the direction of flow of the flue gas at least in the front third of the third boiler flue pass (13).

18. A process according to one of Claims 15 to 17,
**charactersed in that** in a three-pass boiler the selective catalytic reduction takes place in the direction of flow of the flue gas at least in the second turning chamber (17) behind the second boiler flue pass (12).

19. A process according to one of Claims 15 to 19,
**characterised in that** the catalyst assembly (24) comprises zeolite crystals, in particular metal-exchanged zeolite crystals such as of the type Cu-ZSM5, as the catalyst (27).

20. A process according to one of Claims 15 to 19,
**characterised in that** a neutralising agent is added to the fuel and/or the combustion air and/or the reducing agent to reduce the sulphur content.

21. A process according to Claim 20,
**characterised in that** the neutralisation agent is an oil-soluble or water-soluble salt of organic acids with magnesium or calcium.

## Revendications

1. Dispositif catalyseur (24) pour réduire l'émission de matière polluante dans les fumées d'une chaudière à tubes de fumées (10), selon lequel les fumées sont conduites à travers des tubes d'échange de chaleur (14), notamment pour nettoyer les fumées d'une chaudière à trois carneaux, le catalyseur (27) étant installé sur au moins un élément de support (26),
**caractérisé en ce que**
l'élément de support s'introduit au moins en partie dans au moins un tube échangeur de chaleur (14).

2. Dispositif catalyseur selon la revendication 1,
**caractérisé en ce que**
l'élément de support (26) est un tissu de tubes filaires, de tubes pleins ou de tubes perforés.

3. Dispositif catalyseur selon la revendication 2,
**caractérisé en ce que**
le diamètre de l'élément de support (26) représente entre 0,50 jusqu'à 0,90 fois et notamment entre 0,65 à 0,80 fois le diamètre intérieur du tube échangeur de chaleur (14).

4. Dispositif catalyseur selon la revendication 1,
**caractérisé en ce que**
l'élément de support est un ruban en forme de bande de matière pleine, une matière perforée ou un tissu de fil dont la largeur représente entre 0,95 et 0,98 fois le diamètre intérieur du tube échangeur de chaleur (14).

5. Dispositif catalyseur selon l'une quelconque des revendications 1 à 4,
l'élément de support (26) est tenu de manière coulissante dans le tube échangeur de chaleur (14).

6. Dispositif catalyseur selon l'une quelconque des revendications 1 à 5,
**caractérisé en ce que**
l'élément de support (26) est tenu par au moins deux entretoises (29) dirigées radialement vers l'extérieur, dans une position essentiellement centrale dans le tube échangeur de chaleur (14).

7. Dispositif catalyseur selon la revendication 6,
**caractérisé en ce que**
les entretoises (29) sont élastiques pour maintenir l'élément de support (26) avec précontrainte, par une liaison par friction dans le tube échangeur de chaleur (29).

8. Dispositif catalyseur selon l'une quelconque des revendications 1 à 7,
**caractérisé en ce que**
les éléments de support (26) pour différents tubes échangeurs de chaleur (14) de la chaudière ont des longueurs différentes pour compenser les pertes de charge.

9. Dispositif catalyseur selon l'une quelconque des revendications 1 à 8,
**caractérisé en ce que**
les éléments de support (26) des différents tubes échangeurs de chaleur (14) sont introduits à des profondeurs différentes dans ces tubes échangeurs de chaleur (14).

10. Dispositif catalyseur selon l'une quelconque des revendications 1 à 9,
**caractérisé en ce que**
le catalyseur (27) comporte des cristaux de zéolithe, notamment des cristaux de zéolithe avec échange de métal du type Cu-ZSM5.

11. Dispositif catalyseur selon l'une quelconque des revendications 1 à 10,
**caractérisé en ce que**
dans le cas d'une chaudière à trois carneaux, le dispositif catalyseur est installé dans la direction de passage des fumées, au moins dans un tiers du second carneau (12).

12. Dispositif catalyseur selon la revendication 11,
**caractérisé en ce que**
les éléments de support avec le catalyseur pénètrent au moins en partie dans la deuxième chambre de retournement (17) derrière le second carneau (12).

13. Dispositif catalyseur selon les revendications 11 ou 12,
**caractérisé en ce que**
les éléments de support avec le catalyseur sont installés selon la direction de passage des fumées, au moins dans le tiers avant du troisième carneau (13).

14. Dispositif catalyseur selon l'une quelconque des revendications 11 à 13,
**caractérisé en ce que**
les éléments de support et le catalyseur pénètrent au moins en partie dans la deuxième chambre de retournement (17) en amont du troisième carneau (13).

15. Procédé de réduction des émissions polluantes de fumées d'une chaudière à tubes de fumées (10) selon lequel on conduit les fumées à travers des tubes échangeurs de chaleur (14), notamment pour enlever les oxydes d'azote des fumées d'une chaudière à trois carneaux,
selon lequel,
dans le tube de flammes (11), dans la zone des températures comprises entre 750° et 950°C notamment entre 800°C et 850°C, on introduit un agent réducteur pour la réduction sélective non catalytique, dont la quantité introduite est suffisante pour dégager un excédent d'ammoniac, les fumées en partie débarrassées des oxydes d'azote étant conduites avec l'excédent d'ammoniac dans une plage de température comprise entre 170°C et 340°C pour la réduction catalytiquc sélective par un dispositif catalyseur (24) avec un catalyseur prévu sur des éléments de support (26) au moins en partie à l'intérieur d'au moins un tube échangeur de chaleur (14).

16. Procédé selon la revendication 15,
**caractérisé en ce que**
dans le cas d'une chaudière à trois carneaux, la réduction catalytique sélective dans la direction de passage des fumées se fait au moins dans le tiers arrière du second carneau (12).

17. Procédé selon la revendication 15 ou 16,
**caractérisé en ce que**
dans le cas d'une chaudière à trois carneaux, la réduction catalytique sélective dans la direction de passage des fumées se fait au moins dans le tiers avant du troisième carneau (13).

18. Procédé selon l'une quelconque des revendications 15 à 17,
**caractérisé en ce que**
dans le cas d'une chaudière à trois carneaux, la réduction catalytique sélective se fait dans la direction de passage des fumées, au moins dans la seconde chambre de retournement (17) derrière le second carneau (12).

19. Procédé selon l'une quelconque des revendications 15 à 18,
**caractérisé en ce que**
le dispositif catalyseur (24) comporte comme catalyseur (27) des cristaux de zéolithe notamment des cristaux de zéolithe avec échange de métal du type Cu-ZSM5.

20. Procédé selon l'une quelconque des revendications 15 à 19,
**caractérisé en ce qu'**
on ajoute un agent de neutralisation au combustible et/ou à l'air comburant et/ou à l'agent réducteur pour réduire la teneur en soufre.

21. Procédé selon la revendication 20,
**caractérisé en ce que**
l'agent de neutralisation est un sel soluble dans l'huile ou dans l'eau d'un acide organique avec du magnésium ou du calcium.
